(19) **Europäisches Patentamt**
**European Patent Office**
**Office européen des brevets**

(11) **EP 2 601 135 B1**

(12) **EUROPEAN PATENT SPECIFICATION**

(45) Date of publication and mention
of the grant of the patent:
**17.12.2014 Bulletin 2014/51**

(21) Application number: **11728888.6**

(22) Date of filing: **05.07.2011**

(51) Int Cl.:
*C01B 11/02* (2006.01)     *B01J 19/32* (2006.01)

(86) International application number:
**PCT/EP2011/061262**

(87) International publication number:
**WO 2012/004233 (12.01.2012 Gazette 2012/02)**

(54) **PROCESS FOR THE PRODUCTION OF CHLORINE DIOXIDE**

VERFAHREN ZUR HERSTELLUNG VON CHLORDIOXID

PROCÉDÉ DE PRODUCTION DE DIOXYDE DE CHLORE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2010 US 362445 P
08.07.2010 EP 10168832**

(43) Date of publication of application:
**12.06.2013 Bulletin 2013/24**

(73) Proprietor: **Akzo Nobel Chemicals International
B.V.
3811 MH Amersfoort (NL)**

(72) Inventors:
• **VILHELMSSON, Per Johan Henrik**
**S-421 35 Västra Frölunda (SE)**
• **PELIN, Kalle Hans Thomas**
**S-442 53 Ytterby (SE)**

(74) Representative: **Chalk, Anthony John
HGF Limited
Saviour House
9 St Saviourgate
York YO1 8NQ (GB)**

(56) References cited:
**WO-A1-03/000586     US-A- 4 886 653**

**Description**

The invention relates to a process for the production of chlorine dioxide.

There are numerous different processes for chlorine dioxide production. Most large scale processes in commercial use are run at pulp mills and involve continuous reaction of alkali metal chlorate in an acidic aqueous reaction medium with a reducing agent such as hydrogen peroxide, methanol, chloride ions or sulfur dioxide to form chlorine dioxide that is withdrawn as a gas from the reaction medium and then absorbed in water that is brought to a storage tank before being used in the final application, usually pulp bleaching. An overview of such processes can be found in Ullmann's Encyclopedia of Industrial Chemistry, Chlorine Oxides and Chlorine Oxygen Acids, DOI: 10.1002/14356007.a06_483.pub2, Article Online Posting Date: April 15, 2010, p. 17-25. Further examples include those described in US Patents 5091166, 5091167 and EP Patent 612686. These large-scale processes are highly efficient but require extensive process equipment and instrumentation.

For the production of chlorine dioxide from alkali metal chlorate in small-scale units, such as for water purification applications or small bleaching plants, the chlorine dioxide is usually not separated from the reaction medium. Instead, a product stream comprising chlorine dioxide, salt, excess acid and optionally un-reacted chlorate is withdrawn from the reactor and used directly, usually after dilution with water in an eductor. Such processes have in recent years become commercial and are described in e.g. US Patents 2833624, 4534952, 5895638, 6387344, 6790427, 7070710 and 7682592, and in US Patent Applications Publ. No. 2004/0175322, Publ. No. 2003/0031621, Publ. No. 2005/0186131, Publ. No. 2007-0116637 and Publ. No. 2007-0237708. The required process equipment and instrumentation are considerably less extensive than in the large-scale processes described above, but the consumption of chemicals is usually higher per unit of chlorine dioxide produced.

In the processes described above the chlorine dioxide is generated in a reactor without any packing or the like.

US Patent 2676089 discloses a process for the preparation of chlorine dioxide in which a solution of chlorate and a reducing agent is prepared and after addition of a foaming agent it is mixed with acid, while simultaneously blowing in air, whereby foam is obtained. The foam is introduced into the top of a column containing filling bodies. In order to drive off any dissolved chlorine dioxide an inert gas may be blown through the liquid and the gas mixture is withdrawn at the bottom of the column.

US Patent 4886653 discloses a process for producing an aqueous solution containing chlorine dioxide and chlorine. The process comprises mixing a first reactant stream comprising alkali metal chlorate and alkali metal chloride and a second reactant stream comprising sulfuric acid in a mixing zone and drawing up the resulting mixture into a reaction chamber that may be filled with packing material in order to provide for better mixing and lessen the probability of any relatively large chlorine dioxide or chlorine gas bubbles from evolving.

US Patent 5376350 discloses a process for producing chlorine dioxide comprising continuously feeding alkali metal chlorate, sulfuric acid and hydrogen peroxide as a reducing agent to a plug flow reactor comprising a conduit through which fluid flows in an orderly manner with no element of fluid overtaking or mixing with any other element ahead or behind, and forming thereby a plug flow process stream flowing through the reactor.

It is an object of the present invention to provide a process for the production of chlorine dioxide that is simple and does not require extensive process equipment but still is efficient in respect of consumption of the feed chemicals, particularly under circumstances when all process parameters for various reasons cannot be optimized

According to the invention, these objects can be met with a continuous process for the production of chlorine dioxide comprising:

- feeding chlorate ions, hydrogen peroxide and an acid into a reactor comprising packing elements inside;
- reacting said chlorate ions, hydrogen peroxide and acid in said reactor to form a product stream comprising chlorine dioxide; and,
- withdrawing said product stream from said reactor.

The feed chemicals, i.e. the chlorate ions, the hydrogen peroxide and the acid, may be fed into the reactor separately, partly premixed or fully premixed. Preferably they are fed as one or more aqueous solutions.

Chlorate ions may be fed as at least one of alkali metal chlorate, such as sodium chlorate, or as chloric acid. The temperature of the chlorate ion containing feed may for example be from about 10 to about 100°C or from about 20 to about 80°C. The acid fed is preferably a mineral acid such as at least one of sulfuric acid, hydrochloric acid, nitric acid, chloric acid, perchloric acid, phosphorous acid or any mixture thereof, of which sulfuric acid is most preferred. If the acid includes chloric acid, part or all of the chlorate ions fed may originate from the chloric acid.

The molar ratio $H_2O_2$ to $ClO_3^-$ fed to the reactor is suitably from about 0.2:1 to about 2:1, preferably from about 0.5:1 to about 1.5:1 or from about 0.5:1 to about 1:1. Usually it is preferred that the molar ratio of hydrogen peroxide to chlorate is at least stoichiometric, i.e. at least 0.5:1. Alkali metal chlorate always contains some chloride as an impurity, but it is fully possible also to feed more chloride to the reactor, such as metal chloride or hydrochloric acid. However, in order to minimize the formation of chlorine it is preferred to keep the amount of chloride ions fed to the reactor low, suitably less than about 0.01, preferably less than about 0.001, more preferably less than about 0.0005, most preferably less than about 0.0002 moles of chloride ions per mol of chlorate ions (including chloride present in the chlorate as an impurity from the production thereof).

If the acid includes sulfuric acid, it is preferably fed in amounts from about 1 to about 8 kg $H_2SO_4$ or from about 2 to about 6 kg $H_2SO_4$ per kg $ClO_2$ produced.

In the case sulfuric acid is used as a feed to the reactor, it preferably has a concentration from about 60 to about 98 wt% or from about 75 to about 96 wt%. The temperature of the sulfuric acid may, for example, be from about 0 to about 80°C or from about 10 to about 60°C.

In an embodiment alkali metal chlorate and hydrogen peroxide are fed to the reactor as a premixed aqueous solution, for example a composition as described in US 7070710. Such a composition may be an aqueous solution comprising alkali metal chlorate, hydrogen peroxide and at least one of a protective colloid, a radical scavenger or a phosphonic acid based complexing agent.

The acid may be fed into the reactor separately or be mixed with the chlorate and the hydrogen peroxide shortly before entering the reactor. In an embodiment an aqueous solution comprising alkali metal chlorate and hydrogen peroxide is fed through a nozzle or set of nozzles while the acid is fed through a second nozzle or set of nozzles directed opposite to the first nozzle or set of nozzles, such as described in US Patent Application Publ. No. 2004-0175322. In another embodiment an aqueous solution comprising both alkali metal chlorate and hydrogen peroxide is mixed with an acid to form an aqueous reaction mixture, which then is fed into the reactor. In still another embodiment aqueous solutions of alkali metal chlorate, hydrogen peroxide and an acid are mixed to form an aqueous reaction mixture, which then is fed into the reactor.

The reactor may be a through-flow vessel or pipe and may be arranged vertically, horizontally or inclined. In an embodiment the feed chemicals are fed into the reactor at a first end of the reactor, for example at the lower end of a vertically arranged reactor, while the product stream comprising chlorine dioxide is withdrawn at a second end of the reactor, for example at the upper end of a vertically arranged reactor. The cross-section may be of various shapes, for example circular, polygonic (e.g. triangular, square, octagonic) or the like. In an embodiment the reactor is substantially tubular, i.e. having a substantially circular cross-section.

The length (in the main flow direction) of the reactor may, for example, be from about 150 to about 2000 mm or from about 500 to about 1500 mm. The hydraulic diameter of the reactor may, for example be from about 25 to about 600 mm or from about 50 to about 400 mm. The ratio of the length to the hydraulic diameter may, for example, be from about 12:1 to about 1:1 or from about 8:1 to about 3:1. The term hydraulic diameter as used herein is calculated by the formula:

$$D_H = 4\ A/P,$$

where $D_H$ is the hydraulic diameter, A is the cross-sectional area and P is the inner perimeter.

The reaction between chlorate ions, hydrogen peroxide and acid results in the formation of a product stream comprising chlorine dioxide, oxygen, water and, in most cases, some remaining unreacted feed chemicals. If alkali metal chlorate is used as a feed chemical, the product stream comprises alkali metal salt of the acid, such as alkali metal sulfate if sulfuric acid is used as acid. In most cases the product stream comprises both liquid and gas and may at least partly be in the form of foam. Chlorine dioxide and oxygen may be present both as dissolved in the liquid and as gas bubbles, while any alkali metal salt of the acid usually is dissolved in the liquid.

The temperature in the reactor may, for example, be from about 20 to about 85°C or from about 40 to about 80°C. The pressure maintained within the reactor is suitably slightly subatmospheric, for example from about 10 to about 100 kPa absolute or from about 20 to about 95 kPa absolute. The subatmospheric pressure may be obtained by any suitable means, for example by an eductor fed with any suitable motive fluid such as water or inert gas like air.

It has been found that by using a reactor comprising packing elements the back-mixing within the reactor can be increased due to less foam or less compact foam than otherwise. It has further been found that with increased back-mixing the feed chemicals are used more efficiently.

Such improved efficiency is especially noted for processes running at non-optimized conditions, for example when one or more parameters like temperature of feed chemical or in the reactor, pressure in the reactor, acid concentration, acid feed rate, production rate, reactor diameter, reactor height and reactor design, etc, are not fully optimized.

The packing elements may be random-dumped packing elements like Raschig rings, Pall rings, Berl saddles, Intalox saddles etc, as well as a structured packing like dividing walls, grids, corrugated plates, or the like. Random-dumped packings are preferred and the size of the individual elements is preferably from about 5 to about 50 mm or from about 10 to about 30 mm. The entire reactor or only a part thereof, for example from about 30 to about 100 vol%, or from about 50 to about 100 vol%, may comprise packing elements. The fraction void space in the part of the reactor comprising packing elements may, for example, be from about 40 to about 95 vol% or from about 60 to about 95 vol%.

In an embodiment the product stream comprising chlorine dioxide withdrawn from the reactor, including any liquid and gas therein, is brought to an eductor, preferably by a suction force created by the eductor. The eductor is fed with a motive stream that may be a liquid, preferably water, or a gas, preferably an inert gas like air. The product stream is then mixed in the eductor with the motive stream fed thereto to form a diluted product stream, usually also comprising both liquid and gas. Any kind of eductor may be used, such as those described in US Patent 6790427 as well as other commercially available eductors. The diluted product stream my be recirculated as described in US Patent 7682592 or be brought to a gas-liquid separator as described in US Patent Applications Publ. No. 2007-0116637 and Publ. No. 2007-0237708.

In another embodiment the product stream comprising chlorine dioxide withdrawn from the reactor is brought to an absorption tower as described in US Patent Application Publ. No. 2005-0186131.

In still another embodiment the product stream comprising chlorine dioxide withdrawn from the reactor is brought to a gas-liquid separator to obtain a gas comprising chlorine dioxide that may be used as such or be brought to an eductor or an absorption tower for dissolving it into water.

The process of the invention may be used for the production of chlorine dioxide in small or medium scale, for example from about 0.5 to about 300 kg $ClO_2$/hr or from about 10 to about 200 kg $ClO_2$/hr. The process may also be used for production in larger scale, for example up to about 600 kg $ClO_2$/hr or up to about 700 kg $ClO_2$/hr or more.

The invention is further illustrated in the following Examples. Parts and % relate to parts by weight and % by weight, respectively, unless otherwise stated.

Examples

Example 1

In order to demonstrate the improvement that can be achieved by the invention an experimental set-up comprising a laboratory non commercial reactor was used for generating chlorine dioxide. The laboratory reactor had a tubular shape with an internal diameter of 75 mm, a length of 600 mm and was arranged vertically. Inside the reactor a titanium holder containing PVDF (polyvinylidene fluoride) Pall rings with a nominal size of 15 mm was placed. Below the titanium holder 78 wt% sulfuric acid was fed through a first set of nozzles and a pre-mixed aqueous solution comprising 40 wt% sodium chlorate and 8 wt% hydrogen peroxide was fed through a second set of nozzles directed against the first set of nozzles. The feed chemicals were fed at room temperature, i.e. approximately 20 °C. The product stream comprising chlorine dioxide formed was withdrawn from the reactor to an eductor that was fed with motive water to create a suction force that was maintained constant throughout all the experiments. As a result of the suction force the pressure in the reactor was 10-35 kPa while the temperature was 40-50 °C. Trials were made with three different flow rates of the feed chemicals. Several trials were made with each flow rate and the production of chlorine dioxide was measured based on the concentration thereof in the product stream. As a comparison, trials under identical conditions were made in the same reactor but without the holder with Pall rings, i.e. an "empty" reactor. The average production rates for all experiments with each flow rate and reactor set-up are shown in the table below.

Table 1

|  | Sulfuric acid feed (ml/h) | NaClO$_3$ + H$_2$O$_2$ solution feed (ml/h) | Production (g ClO$_2$/h) | Production (g ClO$_2$/h) | Improvement (%) |
|---|---|---|---|---|---|
|  |  |  | Packed reactor | Empty reactor | Packed vs Empty |
| Feed rate 1 | 5820 | 5732 | 1680 | 1445 | 16% |
| Feed rate 2 | 14550 | 14331 | 4376 | 3807 | 15% |
| Feed rate 3 | 23280 | 22930 | 6834 | 5964 | 15% |

It appears that with all the tested feed rates the production of chlorine dioxide was significantly increased by using a packed reactor.

Example 2

Experiments were performed as in Example 1, with the exception that the temperature of the feed chemicals was 0 °C in the storage tanks and approximately 5°C when entering the reactor. As the temperature has an impact on the rate of reaction, this indicates non optimized conditions for the process. The temperature in the reactor was 25-50 °C. The feed rates and results are shown in Table 2 below.

Table 2

| Production rate ClO2 | Sulfuric acid feed (ml/h) | NaClO$_3$ + H$_2$O$_2$ solution feed (ml/h) | Production (g ClO2/h) | Production (g ClO2/h) | Improvement (%) |
|---|---|---|---|---|---|
| | | | Packed reactor | Empty reactor | Packed vs Empty |
| Feed rate 4 | 7280 | 7170 | 2114 | 1965 | 8% |
| Feed rate 2 | 14550 | 14330 | 4258 | 3746 | 14% |
| Feed rate 3 | 23280 | 22930 | 6649 | 5842 | 14% |

It appears that also in these experiments the production of chlorine dioxide for all feed rates was significantly increased by using a packed reactor.

**Claims**

1. A continuous process for the production of chlorine dioxide comprising:

   - feeding chlorate ions, hydrogen peroxide and an acid into a reactor comprising packing elements inside;
   - reacting said chlorate ions, hydrogen peroxide and acid in said reactor to form a product stream comprising chlorine dioxide; and,
   - withdrawing said product stream from said reactor.

2. The process as claimed in claim 1, wherein the reactor comprises random-dumped packing elements.

3. The process as claimed in claim 1, wherein the reactor comprises a structured packing.

4. The process as claimed in claim 3, wherein the structured packing comprises dividing wails.

5. The process as claimed in any one of the claims 1-4, wherein the reactor is a through-flow vessel or pipe, the chlorate ions, the hydrogen peroxide and the acid are fed at a first end of the reactor and the product stream comprising chlorine dioxide is withdrawn at a second end of said reactor.

6. The process as claimed in claim 5, wherein the reactor is arranged vertically, the chlorate ions, the hydrogen peroxide and the acid are fed at the lower end of the reactor and the product stream comprising chlorine dioxide is withdrawn at the upper end of said reactor.

7. The process as claimed in any one of the claims 5-6, wherein the length of the reactor in the flow direction is from about 150 to about 2000 mm.

8. The process as claimed in any one of the claims 5-7, wherein the reactor has a hydraulic diameter of 25 to about 600 mm.

9. The process as claimed in any one of the claims 1-8, wherein the chlorate ions are fed as alkali metal chlorate.

10. The process as claimed in any one of the claims 1-9, wherein the acid is sulfuric acid.

11. The process as claimed in any one of the claims 1-10, wherein the amount of chloride ions fed to the reactor is less than about 0.01 moles of chloride ions per mol of chlorate ions, including chloride present in the chlorate as an impurity from the production thereof.

12. The process as claimed in any one of the claims 1-11, wherein the product stream comprises both liquid and gas.

13. The process as claimed in any one of the claims 1-12, wherein the pressure maintained within the reactor is from about 10 to about 100 kPa absolute.

14. The process as claimed in any one of the claims 1-13, wherein the product stream comprising chlorine dioxide withdrawn from the reactor, including any liquid and gas therein, is brought to an eductor.

15. The process as claimed in any one of the claims 1-13, wherein the product stream comprising chlorine dioxide withdrawn from the reactor, including any liquid and gas therein, is brought to a gas-liquid separator to obtain a gas comprising chlorine dioxide.


**Patentansprüche**

1. Kontinuierliches Verfahren zur Herstellung von Chlordioxid, umfassend:

    - Zufuhr von Chlorationen, Wasserstoffperoxid und einer Säure in einen Reaktor, der darin Packelemente umfasst;
    - Reagieren der Chlorationen, des Wasserstoffperoxids und der Säure in dem Reaktor, um einen Produktstrom zu erzeugen, der Chlordioxid umfasst; und
    - Entfernen des Produktstroms aus dem Reaktor.

2. Verfahren nach Anspruch 1, wobei der Reaktor zufällig abgeladene Packelemente umfasst.

3. Verfahren nach Anspruch 1, wobei der Reaktor eine strukturierte Packung umfasst.

4. Verfahren nach Anspruch 3, wobei die strukturierte Packung Trennwände umfasst.

5. Verfahren nach einem der Ansprüche 1 bis 4, wobei der Reaktor ein Durchflussgefäß oder eine Durchflussröhre ist, wobei die Chlorationen, das Wasserstoffperoxid und die Säure an einem ersten Ende des Reaktors zugeführt werden, und wobei der Chlordioxid umfassende Produktstrom an einem zweiten Ende des Reaktors entfernt wird.

6. Verfahren nach Anspruch 5, wobei der Reaktor vertikal angeordnet ist, wobei die Chlorationen, das Wasserstoffperoxid und die Säure an dem unteren Ende des Reaktors zugeführt werden, und wobei der Chlordioxid umfassende Produktstrom an dem oberen Ende des Reaktors entfernt wird.

7. Verfahren nach einem der Ansprüche 5 oder 6, wobei die Länge des Reaktors in die Strömungsrichtung zwischen etwa 150 und etwa 2000 mm beträgt.

8. Verfahren nach einem der Ansprüche 5 bis 7, wobei der Reaktor einen hydraulischen Durchmesser von 25 bis etwa 600 mm aufweist.

9. Verfahren nach einem der Ansprüche 1 bis 8, wobei die Chlorationen als Alkalimetallchlorat zugeführt werden.

10. Verfahren nach einem der Ansprüche 1 bis 9, wobei die Säure Schwefelsäure ist.

11. Verfahren nach einem der Ansprüche 1 bis 10, wobei die Menge der dem Reaktor zugeführten Chloridionen geringer ist als etwa 0,01 Mol Chloridionen pro Mol Chlorationen, einschließlich in dem Chlorat als eine Verunreinigung der Produktion vorhandenem Chlorid.

12. Verfahren nach einem Ansprüche 1 bis 11, wobei der Produktstrom sowohl Flüssigkeit als auch Gas umfasst.

13. Verfahren nach einem der Ansprüche 1 bis 12, wobei der in dem Druck erhaltene Absolutdruck zwischen etwa 10 und etwa 100 kPa liegt.

**14.** Verfahren nach einem der Ansprüche 1 bis 13, wobei der aus dem Reaktor entfernte Chlordioxid enthaltende Produktstrom, der darin jegliche Flüssigkeit und Gas aufweist, zu einem Ejektor geführt wird.

**15.** Verfahren nach einem der Ansprüche 1 bis 13, wobei der aus dem Reaktor entfernte Chlordioxid enthaltende Produktstrom, der darin jegliche Flüssigkeit und Gas aufweist, zu einem Gas-Flüssigkeits-Abscheider geführt wird, um ein Gas zu erhalten, das Chlordioxid umfasst.

**Revendications**

**1.** Procédé continu destiné à la production de dioxyde de chlore comprenant les étapes consistant à :

- alimenter avec des ions chlorate, du peroxyde d'hydrogène et un acide un réacteur comprenant à l'intérieur des éléments de garniture ;
- faire réagir lesdits ions chlorate, peroxyde d'hydrogène et acide dans ledit réacteur pour former un courant de produit comprenant du dioxyde de chlore ; et
- retirer ledit courant de produit dudit réacteur.

**2.** Procédé selon la revendication 1, le réacteur comprenant des éléments de garniture déversés de façon aléatoire.

**3.** Procédé selon la revendication 1, le réacteur comprenant un emballage structuré.

**4.** Procédé selon la revendication 3, l'emballage structuré comprenant des murs de séparation.

**5.** Procédé selon l'une quelconque des revendications 1 à 4, le réacteur étant un récipient ou un conduit à circulation continue, les ions chlorate, le peroxyde d'hydrogène et l'acide étant alimentés à une première extrémité du réacteur et le courant de produit comprenant le dioxyde de chlore étant retiré à une seconde extrémité dudit réacteur.

**6.** Procédé selon la revendication 5, le réacteur étant arrangé de façon verticale, les ions chlorate, le peroxyde d'hydrogène et l'acide étant alimentés à l'extrémité basse du réacteur et le courant de produit comprenant le dioxyde de chlore étant retiré à l'extrémité haute dudit réacteur.

**7.** Procédé selon l'une quelconque des revendications 5 à 6, la longueur du réacteur dans la direction de flux étant comprise entre environ 150 et environ 2000 mm.

**8.** Procédé selon l'une quelconque des revendications 5 à 7, le réacteur possédant un diamètre hydraulique compris entre 25 et environ 600 mm.

**9.** Procédé selon l'une quelconque des revendications 1 à 8, les ions chlorate sont alimentés en tant que chlorate d'un métal alcalin.

**10.** Procédé selon l'une quelconque des revendications 1 à 9, l'acide étant l'acide sulfurique.

**11.** Procédé selon l'une quelconque des revendications 1 à 10, la quantité d'ions chlorate alimentés au réacteur étant inférieure à environ 0,01 mole d'ions chlorure par mole d'ions chlorate, en incluant le chlorure présent dans le chlorate en tant qu'une impureté de la production de celui-ci.

**12.** Procédé selon l'une quelconque des revendications 1 à 11, le courant de produit comprenant à la fois du liquide et du gaz.

**13.** Procédé selon l'une quelconque des revendications 1 à 12, la pression maintenue au sien du réacteur étant comprise entre environ 10 et environ 100 kPa en pression absolue.

**14.** Procédé selon l'une quelconque des revendications 1 à 13, le courant de produit comprenant le dioxyde de chlore retiré du réacteur, qui inclut n'importe quel liquide et gaz à l'intérieur de celui-ci, étant amené à un éjecteur.

**15.** Procédé selon l'une quelconque des revendications 1 à 13, le courant de produit comprenant le dioxyde de chlore retiré du réacteur, qui inclut n'importe quel liquide et gaz à l'intérieur de celui-ci, étant amené à un séparateur gaz-liquide pour obtenir un gaz comprenant du dioxyde de chlore.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5091166 A
- US 5091167 A
- EP 612686 A
- US 2833624 A
- US 4534952 A
- US 5895638 A
- US 6387344 B
- US 6790427 B
- US 7070710 B

- US 7682592 B
- US 20040175322 A
- US 20030031621 A
- US 20050186131 A
- US 20070116637 A
- US 20070237708 A
- US 2676089 A
- US 4886653 A
- US 5376350 A

**Non-patent literature cited in the description**

- Ullmann's Encyclopedia of Industrial Chemistry, Chlorine Oxides and Chlorine Oxygen Acids. 15 April 2010, 17-25